# EUROPEAN PATENT APPLICATION

(11) **EP 3 995 312 A1**
(43) Date of publication of application: **11.05.2022**
(21) Application number: 20837912.3
(22) Date of filing: 08.05.2020
(51) Int. Cl.: B41J 2/01, C09D 11/101, B41M 5/00

(54) **ACTINIC RAY-CURABLE INK COMPOSITION AND PRODUCTION METHOD FOR INORGANIC FIRED BODY**

(30) Priority: 05.07.2019 JP 2019126174
(71) Applicant: FUJIFILM Corporation, Tokyo 106-8620 (JP)
(72) Inventor: HARA, Minako, Ashigarakami-gun, Kanagawa 258-8577 (JP); MAKUTA, Toshiyuki, Ashigarakami-gun, Kanagawa 258-8577 (JP)
(74) Representative: Klunker IP Patentanwälte PartG mbB
(86) International application number: PCT/JP2020/018683
(87) International publication number: WO 2021/005877

(57) **Abstract**

Provided are an active energy ray curable-type ink composition including an inorganic pigment, a glass frit, a dispersant, a radically polymerizable monomer, and a radical polymerization initiator, wherein the radically polymerizable monomer comprises a monofunctional ethylenically unsaturated monomer at 60% by mass or more with respect to a total amount of the radically polymerizable monomer, and the active energy ray curable-type ink composition is used to produce an inorganic sintered product.

## Description

### BACKGROUND OF THE INVENTION

### 1. Field of the Invention

The present disclosure relates to an active energy ray curable-type ink composition and a method for producing an inorganic sintered product.

### 2. Description of the Related Art

In recent years, there has been a demand for the development of ink capable of recording an image on a heat-resistant base material such as glass. First of all, the required performance is the clearness of the image. In addition, in a case where ink is applied on the heat-resistant base material to form a cured film of ink and then sintered, the cured film may be peeled off, and the improvement of adhesiveness is required.

As ink capable of recording an image on the heat-resistant base material, for example, a color paste containing at least 30% by mass of an inorganic solid selected from the group consisting of a pigment, a glass frit, and other glass-forming components is disclosed in JP2001-39008A. A composition containing silver powder, a glass frit, and a crosslinkable phase transition binder is disclosed in JP2012-527521A. A photocurable ink composition for an ink jet containing a glass flake, a polymerizable compound, and a photopolymerization initiator is disclosed in JP2016-6194A. An ink containing an inorganic pigment that contains a metal compound, a photocurable resin, a photopolymerization initiator, and a dispersant is disclosed in JP2018-188570A.

### SUMMARY OF THE INVENTION

However, since the color paste disclosed in JP2001-39008A does not contain a radically polymerizable monomer and a radical polymerization initiator and is not an active energy ray curable-type ink, bleeding tends to occur in an image. In addition, in JP2012-527521A, an object is to produce a conductor grid having a high aspect ratio on a wafer, which does not focus on the clearness and adhesiveness of an image. In addition, it is described in JP2016-6194A that an image having excellent adhesiveness can be formed, but only the adhesiveness with a recording medium after irradiating the ink composition with ultraviolet rays has been evaluated. The adhesiveness in a case where the ink composition is irradiated with ultraviolet rays and further sintered has not been studied. In addition, it is described in JP2018-188570A that a desired image can be printed precisely, which does not focus on the adhesiveness.

The present disclosure has been made in view of such circumstances, and according to the present disclosure, an active energy ray curable-type ink composition capable of forming a cured film on which a clear image can be recorded and which has excellent adhesiveness to be hardly peeled off from a base material even being sintered, and a method for producing an inorganic sintered product are provided.

The present disclosure includes the following aspects.
<1> An active energy ray curable-type ink composition comprising an inorganic pigment, a glass frit, a dispersant, a radically polymerizable monomer, and a radical polymerization initiator, wherein the radically polymerizable monomer comprises a monofunctional ethylenically unsaturated monomer at 60% by mass or more with respect to a total amount of the radically polymerizable monomer, and the active energy ray curable-type ink composition is used to produce an inorganic sintered product.
<2> The active energy ray curable-type ink composition according to <1>, wherein the monofunctional ethylenically unsaturated monomer comprises one or more kinds of monomers including a monofunctional N-vinyl compound.
<3> The active energy ray curable-type ink composition according to <2>, in which a content of the monofunctional N-vinyl compound is 20% by mass or more with respect to the total amount of the radically polymerizable monomer.
<4> The active energy ray curable-type ink composition according to any one of <1> to <3>, in which a ratio of a content of the glass frit to a content of the inorganic pigment is 0.5 or more in terms of mass basis.
<5> The active energy ray curable-type ink composition according to any one of <1> to <4>, in which a total content of the inorganic pigment and the glass frit is 10% by mass to 55% by mass with respect to a total amount of the ink composition.
<6> A method of producing an inorganic sintered product comprising a step of applying the active energy ray curable-type ink composition according to any one of <1> to <5> onto a heat-resistant base material, a step of irradiating the active energy ray curable-type ink composition with active energy rays to form a cured film on the heat-resistant base material, and a step of sintering the heat-resistant base material on which the cured film is formed to form an inorganic sintered product.

According to the present disclosure, it is possible to provide an active energy ray curable-type ink composition capable of forming a cured film on which a clear image can be recorded and which has excellent adhesiveness to be hardly peeled off from a base material even being sintered, and a method for producing an inorganic sintered product.

### DESCRIPTION OF THE PREFERRED EMBODIMENTS

Hereinafter, an active energy ray curable-type ink composition and a method for producing an inorganic sintered product of the present disclosure will be described in detail.

In the present specification, the numerical ranges expressed using "to" include the numerical values before and after the "to" as each of the minimum value and the maximum value.

Regarding the numerical ranges described in a stepwise manner in the present specification, an upper value or a lower value of a certain numerical range may be replaced with an upper value or a lower value of another numerical range described in a stepwise manner. In addition, regarding the numerical ranges described in the present specification, an upper value or a lower value of a certain numerical range may be replaced with a value shown in Examples.

In the present specification, in a case where a plurality of substances corresponding to each component in a composition, unless otherwise specified, the amount of each component in the composition means the total amount of the plurality of substances present in the composition.

In the present specification, a combination of two or more preferable aspects is a more preferable aspect.

In the present specification, the term "step" includes not only an independent step but also a step provided that the intended purpose of the step is achieved even in a case where the step cannot be clearly distinguished from other steps.

According to the present specification, the term "(meth)acrylate" is a notion that includes both acrylate and methacrylate. In addition, the term "(meth)acrylic" is a notion that includes both acrylic and methacryl.

### [Active Energy Ray Curable-type Ink Composition]

The active energy ray curable-type ink composition (hereinafter, simply referred to as an "ink composition") of the present disclosure contains an inorganic pigment, a glass frit, a dispersant, a radically polymerizable monomer, and a radical polymerization initiator, and a monofunctional ethylenically unsaturated monomer is 60% by mass or more with respect to a total amount of the radically polymerizable monomer. In addition, the ink composition of the present disclosure is an ink composition that is used to produce an inorganic sintered product and can be cured by irradiation with active energy rays. In a case where the ink composition is applied onto a base material and irradiated with the active energy rays, a cured film obtained by the ink composition being cured is formed on the base material. Color is determined depending on the kind of inorganic pigments, and a visible image can be recorded on the base material by using an ink composition containing the inorganic pigments. Then, in a case where the base material on which the cured film is formed is sintered, the inorganic sintered product is obtained.

The ink composition of the present disclosure is an ink composition that can be cured by irradiation with the active energy rays. Therefore, in a case of using the ink composition of the present disclosure, a clear image without bleeding can be obtained.

In the related art, it has been known that an ink composition contains a polyfunctional monomer having two or more polymerizable groups in order to improve curing properties. However, the cured film formed by using the polyfunctional monomer undergoes curing shrinkage in a case of being sintered, and the cured film is easily peeled off from the base material. On the other hand, since the ink composition of the present disclosure contains the radically polymerizable monomer, and the monofunctional ethylenically unsaturated monomer is 60% by mass or more with respect to the total amount of the radically polymerizable monomer, the curing shrinkage is unlikely to occur even through being sintered. Therefore, in a case of using the ink composition of the present disclosure, the cured film is hardly peeled off from the base material even through being sintered, and the adhesiveness with the base material is excellent.

That is, in a case of using the ink composition of the present disclosure, the clear image without bleeding can be obtained, and it is possible to form the cured film having excellent adhesiveness that enables the cured film to be hardly peeled off from the base material even though being sintered.

In addition, the ink composition of the present disclosure contains a glass frit, and the glass frit melts in a case where the base material on which the cured film is formed is sintered. The molten glass frit contributes to the improvement of adhesiveness with the base material.

On the other hand, since the color paste disclosed in JP2001-39008A does not contain a radically polymerizable monomer and a radical polymerization initiator and is not an active energy ray curable-type ink, bleeding tends to occur in an image.

A composition disclosed in JP2012-527521A contains silver powder, glass frits, and crosslinkable phase transition binders. Since as the crosslinkable phase transition binders used in examples, only cyclohexanedimethanol diacrylate is employed, it is considered that curing shrinkage occurs in the case of being sintered, and the cured film is easily peeled off from the base material.

An ink composition disclosed in JP2016-6194A contains a glass flake, a polymerizable compound, and a photopolymerization initiator. However, since this ink composition is not an ink composition used to produce an inorganic sintered product, it is not assumed that the ink composition is sintered after being irradiated with ultraviolet rays.

An ink disclosed in JP2018-188570A contains an inorganic pigment that contains a metal compound, a photocurable resin, a photopolymerization initiator, and a dispersant. In JP2018-188570A, it is focused that a desired image is precisely printed, but not focusing on the adhesiveness. Since the ink of the examples does not contain a glass frit, it is considered that the adhesiveness with the base material is insufficient.

Hereinafter, each component contained in the ink composition of the present disclosure will be described.

### (Radically Polymerizable Monomer)

The ink composition of the present disclosure contains a radically polymerizable monomer. The radically polymerizable monomer is a compound to be a polymer, which is obtained through a polymerization reaction proceeding by the action of radicals generated from a radical polymerization initiator described later. The radically polymerizable monomer may be used singly or two or more thereof may be used in combination.

The radically polymerizable monomer is preferably an ethylenically unsaturated monomer having an ethylenically unsaturated group. Specific examples of the ethylenically unsaturated monomer include a monofunctional ethylenically unsaturated monomer and a polyfunctional ethylenically unsaturated monomer.

In the present disclosure, the monofunctional ethylenically unsaturated monomer is 60% by mass or more with respect to the total amount of the radically polymerizable monomer. In addition, the monofunctional ethylenically unsaturated monomer is preferably 65% by mass or more, more preferably 70% by mass or more, with respect to the total amount of the radically polymerizable monomer. In a case where the monofunctional ethylenically unsaturated monomer is 60% by mass or more with respect to the total amount of the radically polymerizable monomer, even though the base material on which the cured film is formed is sintered, the curing shrinkage is reduced and the cured film is hardly peeled off. That is, the cured film having excellent adhesiveness with the base material can be obtained. In addition, all the radically polymerizable monomers may be monofunctional ethylenic monomers. The monofunctional ethylenically unsaturated monomer may be 100% by mass with respect to the total amount of the radically polymerizable monomer.

The monofunctional ethylenically unsaturated monomer is a compound having one ethylenically unsaturated group, and examples thereof include monofunctional (meth)acrylate, monofunctional (meth)acrylamide, monofunctional aromatic vinyl compounds, monofunctional vinyl ether, and monofunctional N-vinyl compounds.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobornyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, ethyl carbitol (meth)acrylate, 2,2,2-tetrafluoroethyl (meth)acrylate, 1H, 1H, 2H, 2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxy ethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxybutyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinic acid, 2-methacryloyloxyhexahydrophthalic acid, 2-methacryloyloxyethyl-2-hydroxypropylphthalate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified-2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, (meth)acrylic acid(5-ethyl-1,3-dioxane-5-yl)methyl, and phenoxyethylene glycol (meth)acrylate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholin.

Examples of the monofunctional aromatic vinyl compound include styrene, dimethylstyrene, trimethylstyrene, isopropylstyrene, chloromethylstyrene, methoxystyrene, acetoxystyrene, chlorostyrene, dichlorostyrene, bromostyrene, vinyl benzoic acid methyl ester, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene,3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydroflufuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether and phenoxypolyethylene glycol vinyl ether.

Examples of the monofunctional N-vinyl compound include N-vinyl-ε-caprolactam and N-vinylpyrrolidone.

The monofunctional ethylenically unsaturated monomer is preferably selected from the group consisting of isobornyl (meth)acrylate, 2-phenoxyethyl (meth)acrylate, (5-ethyl-1,3-dioxane-5-yl)methyl (meth)acrylate, lauryl (meth)acrylate, 4-tert-butylcyclohexyl (meth)acrylate, 4-hydroxybutyl (meth)acrylate, ethylcarbitol (meth)acrylate, N-vinyl-ε-caprolactam, and N-vinylpyrrolidone, from the viewpoint of obtaining the cured film having excellent adhesiveness with the base material.

The monofunctional ethylenically unsaturated monomer preferably includes one or more kinds of monomers including a monofunctional N-vinyl compound, and more preferably includes two or more kinds of monomers including a monofunctional N-vinyl compound, from the viewpoint of improving the clearness of an image. Specifically, the monofunctional ethylenically unsaturated monomer preferably includes two or more kinds of monomers including: at least one monomer selected from the group consisting of isobornyl (meth)acrylate, 2-phenoxyethyl (meth)acrylate, (5-ethyl-1,3-dioxane-5-yl)methyl (meth)acrylate, lauryl (meth)acrylate, 4-tert-butylcyclohexyl (meth)acrylate, 4-hydroxybutyl (meth)acrylate, and ethylcarbitol (meth)acrylate; and the monofunctional N-vinyl compound.

A content of the monofunctional N-vinyl compound is preferably 20% by mass or more with respect to the total amount of the radically polymerizable monomer. In a case where the content of the monofunctional N-vinyl compound is 20% by mass or more with respect to the total amount of the radically polymerizable monomer, it is effective to improve the clearness of the image. The upper limit of the content of the monofunctional N-vinyl compound is not particularly limited. From the viewpoint of storage stability of the ink composition, the content of the monofunctional N-vinyl compound is preferably 70% by mass or less, more preferably 60% by mass or less, and even more preferably 50% by mass or less with respect to the total amount of the radically polymerizable monomer.

In a case where the monofunctional ethylenically unsaturated monomer is 60% by mass or more with respect to the total amount of the radically polymerizable monomer, the ink composition of the present disclosure may include a polyfunctional ethylenically unsaturated monomer in addition to the monofunctional ethylenically unsaturated monomer. The polyfunctional ethylenically unsaturated monomer is a compound having two or more kinds of ethylenically unsaturated groups, and examples thereof include polyfunctional (meth)acrylate and polyfunctional vinyl ether.

Examples of the polyfunctional (meth)acrylate include ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentandiol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecanedimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth) acrylate, tri(meth)acryloyloxyethoxytrimethylolpropane, glycerin polyglycidyl ether poly(meth)acrylate, and tris(2-acryloyloxyethyl)isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, and hexanediol divinyl ether, 1,4-cyclohexanedimethanol divinyl ether, bisphenol A alkylene oxide divinyl ether, bisphenol F alkylene oxide divinyl ether, trimethylol ethane trivinyl ether, trimethylol propane trivinyl ether, ditrimethylol propane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

### (Inorganic Pigment)

The ink composition of the present disclosure contains an inorganic pigment. The kind of the inorganic pigments contained in the ink composition of the present disclosure is not particularly limited. In the present disclosure, known inorganic pigments can be used. Examples of the inorganic pigment include oxides such as Cr, Ni, Zn, Al, and Ti containing elements such as Fe, Co, Mn, Cr, Cu, Ni, Zn, Al, Ti, V, Bi, and Si, and composite oxides. Specifically, examples thereof include titanium oxides, zinc oxides, iron oxides, Co-Cr-Ni-based composite oxide, Fe-Mn-based composite oxide, Cu-Cr-based composite oxide, Co-Al-based composite oxide, Co-Cr-Al-based composite oxide, Co-Al-Si-based composite oxide, and Bi-V-based composite oxide. The inorganic pigment may be used singly or two or more thereof may be used in combination.

An average particle diameter of the inorganic pigment is not particularly limited, but is preferably 10 nm to 50 µm, more preferably 20 nm to 30 µm from the viewpoint of dispersion stability. In a case where the ink composition of the present disclosure is jetted by an ink jet recording method, the average particle diameter of the inorganic pigment is preferably 20 nm to 600 nm, and more preferably 50 nm to 400 nm, from the viewpoint of jetting stability. The average particle diameter of the inorganic pigment is determined in such a way that a volume average particle diameter is measured by a dynamic light scattering method using a particle size distribution measurement apparatus, for example, the product name "Nanotrack UPA-EX150" manufactured by Nikkiso Co., Ltd.. In addition, in a case where the inorganic pigment is coated with a dispersant, the average particle diameter of the inorganic pigment means an average particle diameter of the inorganic pigment coated with the dispersant.

A content of the inorganic pigment is not particularly limited, but is preferably 1% by mass or more, and more preferably 2% by mass or more with respect to a total amount of the ink composition, from the viewpoint of obtaining a certain transmission concentration. In addition, the content of the inorganic pigment is preferably 30% by mass or less, and more preferably 20% by mass or less, from the viewpoint of jetting stability.

### (Glass Frit)

The ink composition of the present disclosure includes a glass frit. The glass frit refers to glass that is granular, powdery, or the like. The glass frit contained in the ink composition of the present disclosure is not particularly limited as long as the glass frit melts by heat (for example, 400°C to 1300°C) to form a single film. Since the glass frit is contained in the ink composition, peeling of the cured film formed on the base material during the sintering is suppressed.

Components constituting the glass frit are not particularly limited, and examples thereof include SiO₂, K₂O, Na₂O, Li₂O, BaO, SrO, CaO, MgO, BeO, ZnO, PbO, CdO, V₂O5, SnO, ZrO₂, WO₃, MoO₃, MnO, La₂O₃, Nb₂O₅, Ta₂O₅, Y₂O₃, TiO₂, GeO₂, TeO₂ and Lu₂O₃. The glass frit may have only one component, or may have two or more components.

A shape of the glass frit is not particularly limited, and examples thereof include a substantially spherical shape, a flat shape, a plate shape, and a scale shape. An average particle diameter of the glass frit is not particularly limited, but is preferably 10 nm to 50 µm, more preferably 20 nm to 30 µm from the viewpoint of dispersion stability. In a case where the ink composition of the present disclosure is jetted by the ink jet recording method, the average particle diameter of the glass frit is preferably 20 nm to 1 µm, and more preferably 50 nm to 600 nm, from the viewpoint of jetting stability. The average particle diameter of the glass frit is determined in such a way that a volume average particle diameter is measured by a dynamic light scattering method using a particle size distribution measurement apparatus, for example, the product name "Nanotrack UPA-EX150" manufactured by Nikkiso Co., Ltd.. In addition, in a case where the glass frit is coated with a dispersant, the average particle diameter of the glass frit means an average particle diameter of the glass frit coated with the dispersant.

A content of the glass frit is not particularly limited, but is preferably 10% by mass or more with respect to the total amount of the ink composition, from the viewpoint of adhesiveness with the base material and abrasion resistance of the cured film. In addition, the content of the glass frit is preferably 40% by mass or less from the viewpoint of jetting stability.

A ratio of the content of the glass frit to the content of the inorganic pigment is preferably 0.5 or more, and more preferably 1.0 or more in terms of mass basis. In a case where the ratio is 0.5 or more, the cured film is more excellent in abrasion resistance. The upper limit of the ratio is not particularly limited. From the viewpoint of obtaining a certain transmission concentration, the ratio is preferably 15 or less, and more preferably 10 or less.

A total content of the inorganic pigment and the glass frit is not particularly limited, but is preferably 10% by mass to 55% by mass, and more preferably 20% by mass to 45% by mass with respect to the total amount of the ink composition. In a case where the total content is 10% by mass or more, a cured film excellent in adhesiveness with the base material can be obtained. In addition, in a case where the total content is 55% by mass or less, the jetting stability is excellent.

### (Dispersant)

The ink composition of the present disclosure contains a dispersant. The dispersant has a role of stably dispersing the inorganic pigment in a first ink composition. The Kind of the dispersants is not particularly limited, but a polymer dispersant having a weight-average molecular weight of 2000 or more is preferable. Specifically, the polymer dispersant is preferably a polymer having a basic group in a main chain or a side chain. Examples of the polymer having the basic group include a polymer derived from an amine-modified ethylenically unsaturated monomer, a salt of polyaminoamide and an acid ester, modified polyethyleneimine, and modified polyallylamine. Examples of commercially available products include polymers of Solsperse series manufactured by Lubrizol Corporation. The dispersant may be used singly or two or more thereof may be used in combination. The method for measuring a weight-average molecular weight is not particularly limited, but the measurement can be carried out by, for example, a gel permeation chromatography (GPC).

The specific measuring method is as follows. The GPC was performed using the product name HLC-8020GPC manufactured by TOSOH CORPORATION, using three columns of the product name "TSKgel, SuperMultipore HZ-H" (4.6 mmID × 15 cm) manufactured by TOSOH CORPORATION, and using tetrahydrofuran (THF) as an eluent. The measurement is carried out at a sample concentration of 0.45% by mass, a flow rate of 0.35 ml/min, a sample injection volume of 10 µl, and a measurement temperature of 40°C using an IR detector. A calibration curve is manufactured using the product name "TSK standard polystyrene" manufactured by TOSOH CORPORATION: 8 samples of "F-40", "F-20", "F-4", "F-1", "A-5000", "A-2500", "A-1000", and "n-propylbenzene" as a standard sample.

A ratio of a content of the dispersant to the total content of the inorganic pigment and the glass frit is preferably 0.01 to 1.0, and more preferably 0.05 to 0.5 in terms of mass basis. In a case where the ratio is 0.01 to 1.0, the inorganic pigment and the glass frit are stably dispersed in the ink composition, and the storage stability of the ink composition is excellent.

### (Radical Polymerization Initiator)

The ink composition of the present disclosure contains a radical polymerization initiator. As the radical polymerization initiator, a photopolymerization initiator is preferable. The photopolymerization initiator is a compound having a function of generating radicals that are polymerization active species, by irradiation with active energy rays. In the present disclosure, it is more preferable that the photopolymerization initiator has a function of generating radicals by irradiation with ultraviolet rays.

Examples of the photopolymerization initiator include an alkylphenone-based photopolymerization initiator, an acylphosphine oxide-based photopolymerization initiator, an intramolecular hydrogen abstraction-type photopolymerization initiator, an oxime ester-based photopolymerization initiator, and a cationic photopolymerization initiator. Among these, the photopolymerization initiator is preferably an acylphosphine oxide-based photopolymerization initiator or an intramolecular hydrogen abstraction-type photopolymerization initiator. Examples of the acylphosphine oxide-based photopolymerization initiator include phenylbis(2,4,6-trimethylbenzoyl)phosphine oxide and diphenyl(2,4,6-trimethylbenzoyl)phosphine oxide. Examples of the intramolecular hydrogen abstraction-type photopolymerization initiator include benzophenone derivatives and thioxanthone derivatives.

A content of the radical polymerization initiator is preferably 1% by mass to 15% by mass, and more preferably 2% by mass to 10% by mass, with respect to the total amount of the ink composition.

### (Other Components)

The ink composition of the present disclosure can contain, as necessary, other components in addition to the inorganic pigment, the glass frit, the dispersant, the radically polymerizable monomer, and the radical polymerization initiator, as long as the effects of the present disclosure are not impaired. Examples of the other components include surfactants and polymerization inhibitors.

### (Surfactant)

The ink composition of the present disclosure preferably contains a surfactant from the viewpoint of wettability to the base material and jetting stability. Examples of the surfactant include anionic surfactants such as fatty acid salts, ester salts of higher alcohols, alkylbenzene sulfonates, sulfosuccinic acid ester salts, and phosphoric acid ester salts of higher alcohols; cationic surfactants such as aliphatic amine salts and quaternary ammonium salts; nonionic surfactants such as higher alcohol ethylene oxide adducts, alkylphenol ethylene oxide adducts, polyhydric alcohol fatty acid ester ethylene oxide adducts, and acetylene glycol ethylene oxide adducts; and amphoteric surfactants such as an amino acid-type surfactant and a betaine-type surfactant.

In addition, examples of the surfactant include a fluorine-based surfactant and a silicone-based surfactant. In a case where the ink composition of the present disclosure is jetted by the ink jet recording method, the surfactant is preferably a silicone-based surfactant, and more preferably an organically modified polysiloxane, from the viewpoint of jetting stability. The organically modified polysiloxane refers to a polysiloxane in which an organic group is introduced into a part of a methyl group of a polydimethylsiloxane.

Examples of the organically modified polysiloxane include polyether-modified polydimethylsiloxane, phenyl-modified polydimethylsiloxane, alcohol-modified polydimethylsiloxane, alkyl-modified polydimethylsiloxane, aralkyl-modified polydimethylsiloxane, fatty acid ester-modified polydimethylsiloxane, epoxy-modified polydimethylsiloxane, amine-modified polydimethylsiloxane, amino-modified polydimethylsiloxane, and mercapto-modified polydimethylsiloxane. Among these, the organically modified polysiloxane is preferably a polyether-modified polydimethylsiloxane.

A content of the surfactant is preferably 0.01% by mass to 3.0% by mass, and more preferably 0.05% by mass to 1.5% by mass, with respect to the total amount of the ink composition.

### (Polymerization Inhibitor)

The ink composition of the present disclosure preferably contains a polymerization inhibitor from the viewpoint of storage stability. Examples of the polymerization inhibitor include nitroso-based polymerization inhibitors, hindered amine-based polymerization inhibitors, hydroquinone, benzoquinone, p-methoxymethoxyphenol, TEMPO (2,2,2,6-tetramethylpiperidin-1-oxyl), TEMPOL (4-hydroxy-2,2,6,6-tetramethylpiperidin-1-oxyl), and cuperon Al.

A content of the polymerization inhibitor is preferably 0.01% by mass to 3.0% by mass, and more preferably 0.05% by mass to 2.0% by mass, with respect to the total amount of the ink composition.

### (Organic Solvent)

The ink composition of the present disclosure may further contain an organic solvent. The content of the organic solvent is not particularly limited, but is preferably 5.0% by mass or less, and more preferably 3.0% by mass or less, with respect to the total amount of the ink composition.

Examples of the organic solvent include ketones such as acetone, methyl ethyl ketone, and diethyl ketone; alcohols such as methanol, ethanol, 2-propanol, 1-propanol, 1-butanol, and tert-butanol;
chlorine-based solvents such as chloroform and methylene chloride; aromatic solvents such as benzene and toluene; ester solvents such as ethyl acetate, butyl acetate, isopropyl acetate, ethyl lactate, butyl lactate, and isopropyl lactate; ether-based solvents such as diethyl ether, tetrahydrofuran, and dioxane; glycol ether solvents such as ethylene glycol monomethyl ether, ethylene glycol dimethyl ether, and propylene glycol monomethyl ether; and glycol ether acetate solvents such as propylene glycol monomethyl ether acetate.

### (Physical Properties of Ink Composition)

In the present disclosure, a viscosity of the ink composition is not particularly limited, but in a case of being jetted by the ink jet recording method, 5 mPa·s to 50 mPa·s is preferable, 10 mPa·s to 40 mPa·s is more preferable, and 15 mPa·s to 30 mPa·s is even more preferable, from the viewpoint of jetting stability. The viscosity of the ink composition is measured under a condition of 25°C using a rotary viscometer, for example, the product name "VISCOMETER TV-22" manufactured by Toki Sangyo Co., Ltd..

In the present disclosure, a surface tension of the ink composition is not particularly limited, but is preferably, for example, 15 mN/m to 50 mN/m, more preferably 20 mN/m to 45 mN/m, and even more preferably 25 mN/m to 40 mN/m. The surface tension of the ink composition can be adjusted by, for example, the kind and content of the surfactant contained in the ink composition. The surface tension of the ink composition is measured under a condition of 25°C by a plate method using a surface tension meter, for example, the product name "Fully Automatic Surface Tensiometer CBVP-Z" manufactured by Kyowa Interface Science Co., Ltd..

### <Method for Producing Inorganic Sintered Product>

A method for producing an inorganic sintered product of the present disclosure preferably includes a step of applying the ink composition onto a heat-resistant base material (ink applying step), a step of irradiating the ink composition with active energy rays to form a cured film on the heat-resistant base material (active energy ray irradiation step), and a step of sintering the heat-resistant base material on which the cured film is formed to form an inorganic sintered product (sintering step).

### (Ink Applying Step)

In the method for producing an inorganic sintered product of the present disclosure, first, the ink composition is applied onto the heat-resistant base material. The ink composition can be applied by the application of a known method such as a coating method, a dipping method, or an ink jet recording method. The coating method is carried out using, for example, a bar coater, an extrusion coater, an air doctor coater, a blade coater, a rod coater, a knife coater, a squeeze coater, or a reverse roll coater. In the present disclosure, it is preferable to apply the ink composition by the ink jet recording method from the viewpoint that a precise image can be recorded on the heat-resistant base material.

A known method can be usually used as the ink jet recording method, and examples thereof include an electric charge control method in which an ink composition is jetted by utilizing the electrostatic attraction force; a drop-on-demand method (pressure pulse method) in which the vibration pressure of a piezoelectric element is utilized; an acoustic ink jet method in which electric signals are converted into acoustic beams, the ink composition is irradiated with the acoustic beams, and the ink composition is jetted by utilizing the radiation pressure; and a thermal ink jet method in which an ink composition is heated to form air bubbles, and the pressure thus generated is utilized.

In general, the image recording method carried out by an ink jet recording device includes a shuttle scan method (also referred to as a "serial head method") in which an image is recorded using a short serial head, and a single-pass method (also referred to as a "line head method") in which an image is recorded using a line head on which recording elements is arranged by corresponding to the entire recording medium in a width direction. In the shuttle scan method, an image is recorded while a serial head scans a recording medium in a width direction. On the other hand, in the single-pass method, an image can be recorded on the entire surface of a recording medium by the recording medium being scanned in a direction orthogonal to an arrangement direction in which the recording elements are arranged. Therefore, unlike the shuttle scan method, a transport system such as a carriage that causes the serial head to scan the recording medium is not required in the single-pass method. In addition, in the single-pass method, complicated scanning control of the movement of the carriage with the recording medium is not required, and only the recording medium moves, so that the recording speed can be increased as compared with the shuttle scan method.

From the viewpoint of image quality, the amount of droplets of the ink composition jetted from an ink jet head is preferably 2 picoliter (pL) to 80 pL, and more preferably 10 pL to 40 pL. The amount of droplets means a volume of ink jetted from one nozzle at one time by the ink jet recording method.

The amount of the applied ink composition may be appropriately adjusted depending on the image, and is preferably 1 g/m² to 50 g/m², and more preferably 5 g/m² to 30 g/m².

Resolution related to the jetting of the ink composition is preferably 100 dot per inch (dpi) × 100 dpi to 2400 dpi × 2400 dpi, and more preferably 200 dpi × 200 dpi to 600 dpi × 600 dpi. In addition, "dpi" means the number of dots per 25.4 mm.

The heat-resistant base material to which the ink composition is applied is not particularly limited as long as the heat-resistant base material is a base material that does not deform or deteriorate in the sintering step described later, and examples thereof include glass, ceramic, and metals.

### (Active Energy Ray Irradiation Step)

After the ink applying step, the ink composition applied on the heat-resistant base material is irradiated with active energy rays. The radically polymerizable monomer contained in the ink composition is polymerized by irradiation with the active energy rays and cured to form the cured film on the heat-resistant base material. Examples of the active energy rays include ultraviolet rays, visible rays, and electron beams. Among these, as the active energy ray, the ultraviolet rays (hereinafter, also referred to as "UV") are preferably used.

A peak wavelength of the ultraviolet rays is, for example, preferably 200 nm to 405 nm, more preferably 250 nm to 400 nm, and even more preferably 300 nm to 400 nm.

It is appropriate that the ultraviolet rays are emitted with an energy of 20 mJ/cm² to 5 J/cm², and preferably emitted with an energy of 100 mJ/cm² to 1,500 mJ/cm². The irradiation time is preferably 0.01 seconds to 120 seconds, and more preferably 0.1 seconds to 90 seconds. As irradiation conditions and a basic irradiation method, irradiation conditions and irradiation methods disclosed in JP1985-132767A (JP-H60-132767A) can be applied. Specifically, as the irradiation method, a method in which light sources is provided on both sides of a head unit including an ink composition jetting device to carry out the scanning by the head unit and the light sources with a so-called shuttle method, or a method for carrying out the scanning by other light sources that do not involve driving.

As a light source for emitting the ultraviolet rays, a mercury lamp, a gas laser, and a solid-state laser are mainly used, and a mercury lamp, a metal halide lamp, and an ultraviolet fluorescent lamp are widely known. In addition, replacement with a gallium nitride(GaN)-based semiconductor ultraviolet ray emitting device is extremely useful industrially and environmentally, and UV-LED (light emitting diode) and UV-LD (laser diode) are compact, have a long life, have high efficiency and low cost, and are expected as light sources for emitting ultraviolet rays. Among these, as the light source, a metal halide lamp, a high-pressure mercury lamp, a medium-pressure mercury lamp, a low-pressure mercury lamp, or a UV-LED is preferably used.

### (Sintering Step)

After the active energy ray irradiation step, the heat-resistant base material on which the cured film is formed is sintered. As a result, an inorganic sintered product is formed.

The sintering method is not particularly limited, and can be carried out using a generally known sintering furnace. The sintering temperature may be appropriately adjusted depending on the kind of the heat-resistant base materials, the melting temperature of the glass frit contained in the ink composition, and the like, and is preferably 400°C to 1300°C. The sintering time may be appropriately adjusted together with the melting temperature, and is not particularly limited. In addition, the cooling time from the melting temperature to room temperature may be appropriately adjusted so that cracks or the like do not occur in the heat-resistant base material due to sudden cooling, and is not particularly limited.

### Examples

Hereinafter, the present disclosure will be described in more detail with reference to Examples, but the present disclosure is not limited to the following Examples as long as the gist of the present disclosure is not exceeded.

### [Preparation of Ink Composition]

In Examples 1 to 20 and Comparative Example 1, individual components shown in Table 1 and Table 2 were mixed. The mixture was dispersed in a beads mill for 10 hours to obtain an ink composition. A glass frit was pulverized in advance and then mixed with other components. The unit of the numerical values shown in Table 1 and Table 2 is "% by mass".

Details of individual components shown in Table 1 and Table 2 are as follows.

### (1) Inorganic Pigment

· Black (BK): Fe-Mn-based composite oxide (product name "Black 980", manufactured by Shepherd Color Company)
· Cyan (C): Co-Cr-Al-based composite oxide (product name "Cyan 561", manufactured by Shepherd Color Company)
   Magenta (M): Fe oxide (product name "Magenta 307", manufactured by Shepherd Color Company)
· Yellow (Y): Bi-V composite oxide (product name "Yellow 259", manufactured by Shepherd Color Company)
· White (W): Titanium oxide (product name "Kronos 2300", manufactured by Kronos Incorporated.)

### (2) Glass Frit

· Glass Frit A: Product name "Flux 1811", manufactured by IZAWA PIGMENT CO., LTD.
· Glass frit B: Product name "Flux 1611", manufactured by IZAWA PIGMENT CO., LTD.

### (3) Radically Polymerizable Monomer (indicated simply as "monomer" in Table 1 and Table 2)

### <Monofunctional Ethylenically Unsaturated Monomer>

· NVC: N-vinyl-ε-caprolactam (manufactured by Tokyo Chemical Industry Co., Ltd.)
· NVP: N-vinyl2-pyrrolidone (manufactured by Nippon Shokubai Co., Ltd.)
· IBOA: Isobornyl acrylate (product name "SR506NS", manufactured by Sartomer Company Inc.)
· CTFA: Acrylic acid(5-ethyl-1,3-dioxane-5-yl)methyl (product name "Viscort#200", manufactured by OSAKA ORGANIC CHEMICAL INDUSTRY LTD.)
· PEA: 2-phenoxyethyl acrylate (product name "SR339A", manufactured by Sartomer Company Inc.)
· LA: Lauryl acrylate (product name "LA", manufactured by OSAKA ORGANIC CHEMICAL INDUSTRY LTD.)
· TBCHA: 4-tert-butylcyclohexyl acrylate (product name "SR217", manufactured by Sartomer Company Inc.)
· 4-HBA: 4-hydroxybutyl acrylate (product name "4-HBA", manufactured by OSAKA ORGANIC CHEMICAL INDUSTRY LTD.)
· CBA: Ethyl carbitol acrylate (product name "Viscort#190", manufactured by OSAKA ORGANIC CHEMICAL INDUSTRY LTD.)

### <Bifunctional Ethylenically Unsaturated Monomer>

· SR341: 3-methyl-1,5-pentanediol diacrylate (product name "SR341", manufactured by Sartomer Company Inc.)
· HDDA: 1,6-hexanediol diacrylate (product name "SR238", manufactured by Sartomer Company Inc.)
· DVE-3: Triethylene glycol divinyl ether (product name "DVE-3", manufactured by BASF SE)
· DPGDA: Dipropylene glycol diacrylate (product name "DPGDA", manufactured by Polymer Technologies Inc.)

### <Trifunctional Ethylenically Unsaturated Monomer>

· EOTMPTA: Trimethylol propane EO-added triacrylate (product name "SR454", manufactured by Sartomer Company Inc.)

### (4) Dispersant

Dispersant: Product name "Solsperse 32000", manufactured by The Lubrizol Corporation

### (5) Radical Polymerization Initiator (indicated simply as "Polymerization initiator" in Table 1 and Table 2)

· IRG819: Phenylbis(2,4,6-trimethylbenzoyl)phosphine oxide (product name "Irgacure 819", manufactured by BASF SE)
· TPO: Diphenyl(2,4,6-trimethylbenzoyl)phosphine oxide (product name "Omnirad TPO", manufactured by IGM Resins B.V)
· ITX: Isopropylthioxanthone (product name "ITX", manufactured by Lambson Ltd.)

### (6) Surfactant

· Polyether-modified polydimethylsiloxane (product name "BYK307", manufactured by BYK Japan KK)

### (7) Polymerization Inhibitor

· UV12: Tris(N-nitroso-N-phenylhydroxylamine)aluminum salt (product name "FLORSTAB UV-12", manufactured by Kromachem Ltd.)
· TEMPOL: 4-hydroxy-2,2,6,6-tetramethylpiperidine-1-oxyl (manufactured by Tokyo Chemical Industry Co., Ltd.)

In Table 1 and Table 2, the total amount (% by mass) of the radically polymerizable monomer is shown as "Total amount of monomer". The content (% by mass) of the monofunctional ethylenically unsaturated monomer with respect to the total amount of the radically polymerizable monomer is described as "Ratio of monofunctional monomer". A content (% by mass) of a monofunctional N-vinyl compound with respect to the total amount of the radically polymerizable monomer is described as "Ratio of N-vinyl compound". A ratio of the content of the glass frit to the content of the inorganic pigment is described as "Glass frit/inorganic pigment". The total content (% by mass) of the inorganic pigment and the glass frit is described as "Inorganic pigment + glass frit".

### [Method for Producing Inorganic Sintered Product]

The prepared ink composition was filled in a UV-curable ink jet recording device (product name "Acuity EY", manufactured by FUJIFILM Corporation). A resolution is set to 450 dpi × 450 dpi, and the ink composition was jetted on a soft glass base material (blue plate glass 150 mm × 180 mm × 1.1 mm, manufactured by Central Glass Co., Ltd.) at an imparted amount of 9.5 g/m², and a solid image having a halftone dot rate of 100% was recorded and irradiated with ultraviolet rays using a metal halide light source to completely cure the image. As a result, a cured film made of the ink composition was formed on the soft glass base material. The soft glass base material on which the cured film was formed was set in a batch electric furnace and heated to 600°C over 5 hours. The soft glass base material was maintained at 600°C for 10 minutes, and then cooled to room temperature over 10 hours to obtain an inorganic sintered product.

Next, using ink compositions prepared in Examples and Comparative Examples, jetting stability, curing properties, adhesiveness, and abrasion resistance were evaluated. The evaluation methods are as follows. The evaluation results are shown in Table 1 and Table 2.

### <Jetting Stability>

The prepared ink composition was filled in an ink cartridge attached to an ink jet recording device (product name "DMP-2831", manufactured by FUJIFILM Corporation). The ink composition was continuously jetted for 10 minutes, the number of non-jetting nozzles was counted. The jetting stability was evaluated based on the calculation of a ratio (%) of the number of non-jetting nozzles to the total number of nozzles. It is determined that the smaller the ratio of the number of non-jetting nozzles is, the better the jetting stability is. The evaluation standards are as follows. A and B are levels at which there is no problem in practical use. The non-jetting nozzle refers to a nozzle that cannot jet the ink composition due to clogging or the like.
A: The ratio of the number of non-jetting nozzles is less than 10%.
B: The ratio of the number of non-jetting nozzles is 10% or more and less than 20%.
C: The ratio of the number of non-jetting nozzles is 20% or more.

### <Curing Properties>

A square coated paper of 2 cm (product name "OK Top Coat", manufactured by Oji Paper Co., Ltd.) was placed on the soft glass base material on which the cured film was formed before sintering. A stainless steel weight of 200 g (manufactured by SHINKO DENSHI CO., LTD.) was placed on the coated paper and left for 10 minutes. After 10 minutes, the weight and the coated paper were removed, and the coated paper was visually observed to evaluate the curing properties. It is determined that the more the ink composition has not adhered to the coated paper, the better the curing properties. The evaluation standards are as follows. A and B are levels at which there is no problem in practical use. Regarding the evaluation, the curing properties of the cured film before sintering is evaluated. The higher the evaluation regarding the curing properties, the higher the clearness of the image after sintering.
A: The ink composition has not adhered to the coated paper at all.
B: Some of the ink composition has adhered to the coated paper, but there is no significant change in the appearance of the cured film as compared with before the test.
C: A large amount of the ink composition adhered to the coated paper, and there is a large change in the appearance of the cured film as compared with before the test.

### <Adhesiveness>

Adhesiveness was evaluated based on the visual observation of the obtained inorganic sintered product. It is determined that the adhesiveness is excellent as the cured film has not been peeled off. The evaluation standards are as follows. A and B are levels at which there is no problem in practical use.
A: The cured film has not been peeled off at all.
B: Some part of the cured film has been peeled off, but there is no significant change in the appearance as compared with before the test.
C: The cured film has been peeled off, and there is a large change in the appearance of the cured film as compared with before the test.

### <Abrasion Resistance>

The obtained inorganic sintered product was evaluated for abrasion resistance of the cured film using a Gakushin-type friction fastness tester (product name "AB-301", manufactured by TESTER SANGYO CO., LTD.). The coated paper was fixed to a friction element to be reciprocated 50 times at a reciprocating speed of 30 times per minute under a weighting condition of 200 g/cm². It is determined that the more the cured film has not adhered to the coated paper, the better the abrasion resistance. The evaluation standards are as follows. A and B are levels at which there is no problem in practical use.
A: After the reciprocating test, the cured film has not adhered to the coated paper at all.
B: After the reciprocating test, some part of the cured film has adhered to the coated paper, but there was no significant change in the appearance as compared with before the test.
C: After the reciprocating test, a large part of the cured film has adhered to the coated paper, and there is a large change in the appearance as compared with before the test.

**[Table 1]**

| | | Example 1 | Example 2 | Example 3 | Example 4 | Example 5 | Example 6 | Example 7 | Example 8 | Example 9 ' | Example 10 |
|---|---|---|---|---|---|---|---|---|---|---|---|
| Inorganic pigment | BK | 10 | 10 | 10 | 15 | 15 | 20 | 15 | - | - | - |
| | c | - | - | - | - | - | - | - | 15 | - | - |
| | M | - | - | - | - | - | - | - | - | 15 | - |
| | Y | - | - | - | - | - | - | - | - | - | 15 |
| | W | - | - | - | - | - | - | - | - | - | - |
| Glass frit | Glass frit A | 10 | 15 | 20 | 15 | 20 | 20 | 20 | 20 | - | - |
| | Glass frit B | - | - | - | - | - | - | - | - | 20 | 20 |
| Monomer | NVC | 18.8 | 17.6 | 16.5 | 16.5 | 15.1 | 20.0 | 23.5 | 15.3 | 100 | 19.5 |
| | NVP | - | - | - | - | - | - | - | - | - | - |
| | IBOA | 22.4 | 21.0 | 17.7 | 17.7 | 14.6 | 18.9 | - | 6.5 | 15.8 | - |
| | CTFA | 22.5 | - | - | - | - | - | 15.9 | 13.0 | 10.6 | 2.7 |
| | PEA | - | 15.9 | 12.6 | 5.6 | - | - | - | 10.4 | - | 24.5 |
| | LA | - | - | - | - | - | 6.0 | - | - | - | - |
| | TBCHA | - | - | - | - | - | - | 9.8 | - | - | - |
| | 4-HBA | - | - | - | - | - | - | - | 4.0 | - | - |
| | CBA | - | - | - | - | - | - | - | - | 63 | - |
| | SR341 | - | 3.8 | 7.0 | 14.0 | 10.0 | - | - | - | - | - |
| | HDDA | - | - | - | - | - | - | - | - | 6.5 | - |
| | DVE-3 | - | - | - | - | 9.5 | - | - | - | - | - |
| | DPGDA | - | - | - | - | - | - | - | - | - | - |
| | EOTMPTA | - | - | - | - | - | - | - | - | - | 2.5 |
| Dispersant | | 5.9 | 6.8 | 7.0 | 7.0 | 7.2 | 7.2 | 7.2 | 7.2 | 7.2 | 7.2 |
| Polymerization initiator | IRG819 | 4.0 | 3.8 | 3.5 | 3.5 | 3.3 | 3.0 | 3.3 | 3.3 | 3.3 | 3.3 |
| | TPO | 2.2 | 2.1 | 2.0 | 2.0 | 1.8 | 17 | 1.8 | 1.8 | 1.8 | 1.8 |
| | ITX | 2.4 | 2.3 | 2.1 | 2.1 | 2.0 | 1.8 | 2.0 | 2.0 | 2.0 | 2.0 |
| Surfactant | BYK307 | 0.1 | 0.1 | 0.1 | 0.1 | 0.1 | 0.1 | 0.1 | 0.1 | 0.1 | 0.1 |
| Polymerization inhibitor | UV12 | 1.6 | 1.5 | 1.4 | 1.4 | 1.3 | 1.2 | 1.3 | 1.3 | 1.3 | 1.3 |
| | TEMPOL | 0.1 | 0.1 | 0.1 | 0.1 | 0.1 | 0.1 | 0.1 | 0.1 | 0.1 | 0.1 |
| Total amount of monomer | | 63.7 | 58.3 | 53.8 | 53.8 | 49.2 | 44.9 | 49.2 | 49.2 | 49.2 | 49.2 |
| Ratio of monofunctional monomer | | 100 | 93.5 | 87.0 | 74.0 | 60.4 | 100 | 100 | 100 | 868 | 94.9 |
| Ratio of N-vinyl compound | | 29.5 | 30.2 | 30.7 | 30.7 | 30.7 | 44.5 | 47.8 | 31.1 | 20.3 | 39.6 |
| Glass frit/inorganic pigment | | 1.0 | 1.5 | 2.0 | 1.0 | 1.3 | 1.0 | 1.3 | 1.3 | 1.3 | 1.3 |
| Inorganic pigment + glass frit | | 20 | 25 | 30 | 30 | 35 | 40 | 35 | 35 | 35 | 35 |
| Evaluation result | Jetting stability | A | A | A | A | A | A | A | A | A | A |
| | Curability | A | A | A | A | A | A | A | A | A | A |
| | Adhesiveness | A | A | A | A | B | A | A | A | A | A |
| | Abrasion resistance | A | A | A | A | A | A | A | A | A | A |

**[Table 2]**

| | | Example 11 | Example 12 | Example 13 | Example 14 | Example 15 | Example 16 | Example 17 | Example 18 | Example 19 | Example 20 | Comparative Example 1 |
|---|---|---|---|---|---|---|---|---|---|---|---|---|
| Inorganic pigment | BK | - | 10 | 10 | 20 | - | - | - | 2 | - | 10 | 10 |
| | c | - | - | - | - | 3.5 | - | - | - | - | - | - |
| | M | - | - | - | - | - | 10 | - | - | - | - | - |
| | Y | - | - | - | - | - | - | 5 | - | - | - | - |
| | W | 20 | - | - | - | - | - | - | - | 15 | - | - |
| Glass frit | Glass frit A | - | 10 | 10 | - | - | 30 | 35 | - | - | 10 | - |
| | Glass frit B | 20 | - | - | 8 | 40 | - | - | 7 | 45 | - | 10 |
| Monomer | NVC | 15.9 | - | - | 18.8 | - | 15.9 | 20.0 | 17.6 | 9.0 | 8.0 | 16.0 |
| | NVP | - | - | 18.8 | - | 16.5 | - | - | - | - | - | - |
| | IBOA | 12.2 | 11.8 | 22.4 | 22.4 | 18.9 | 12.2 | 18.9 | 21.0 | 10.0 | 11.8 | 18.1 |
| | CTFA | - | 29.6 | 22.5 | 15.7 | - | - | - | 19.5 | 8.4 | 21.6 | - |
| | PEA | 7.8 | - | - | - | - | 7.8 | - | 15.9 | - | - | - |
| | LA | - | - | - | - | 6.0 | - | - | - | - | - | - |
| | TBCHA | - | - | - | - | - | - | - | - | - | - | - |
| | 4-HBA | - | - | - | - | - | - | - | - | - | - | - |
| | GBA | - | - | - | - | - | - | - | - | - | | - |
| | SR341 | - | 22.3 | - | - | - | - | - | 3.8 | - | 22.3 | 29.6 |
| | HDDA | - | - | - | - | - | - | 6.0 | - | - | - | - |
| | DVE-3 | - | - | - | - | - | - | - | - | - | - | - |
| | DPGDA | 9.0 | - | - | - | - | 9.0 | - | - | - | - | - |
| | EOTMPTA | - | - | - | - | - | - | - | - | - | - | - |
| Dispersant | | 7.2 | 5.9 | 5.9 | 7.2 | 7.2 | 7.2 | 7.2 | 2.8 | 7.2 | 5.9 | 5.9 |
| Polymerization initiator | IRG819 | 3.0 | 4.0 | 4.0 | 3.0 | 3.0 | 3.0 | 3.0 | 4.0 | 2.0 | 4.0 | 4.0 |
| | TPO | 1.7 | 2.2 | 2.2 | 1.7 | 1.7 | 1.7 | 1.7 | 2.2 | 1.0 | 2.2 | 2.2 |
| | ITX | 1.8 | 2.4 | 2.4 | 1.8 | 1.8 | 1.8 | 1.8 | 2.4 | 1.0 | 2.4 | 2.4 |
| Surfactant | BYK307 | 0.1 | 0.1 | 0.1 | 0.1 | 0.1 | 0.1 | 0.1 | 0.1 | 0.1 | 0.1 | 0.1 |
| Polymerization inhibitor | UV12 | 1.2 | 1.6 | 1.6 | 1.2 | 1.2 | 1.2 | 1.2 | 1.6 | 1.2 | 1.6 | 1.6 |
| | TEMPOL | 0.1 | 0.1 | 0.1 | 0.1 | 0.1 | 0.1 | 0.1 | 0.1 | 0.1 | 0.1 | 0.1 |
| Total amount of monomer | | 44.9 | 63.7 | 63.7 | 56.9 | 41.4 | 44.9 | 44.9 | 77.8 | 27.4 | 63.7 | 63.7 |
| Ratio of monofunctional monomer | | 80.0 | 65.0 | 100 | 100 | 100 | 80.0 | 86.6 | 95.1 | 100 | 65.0 | 53.5 |
| Ratio of N-vinyl compound | | 35.4 | 0 | 29.5 | 33.0 | 39.9 | 35.4 | 44.5 | 22.6 | 32.8 | 12.6 | 25.1 |
| Glass frit/inorganic pigment | | 1.0 | 1.0 | 1.0 | 0.4 | 11.4 | 3.0 | 7.0 | 3.5 | 3.0 | 1.0 | 1.0 |
| Inorganic pigment + glass frit | | 40 | 20 | 20 | 28 | 44 | 40 | 40 | 9 | 60 | 20 | 20 |
| Evaluation result | Jetting stability | A | A | A | A | A | A | A | A | B | A | A |
| | Curability | A | B | A | A | A | A | A | A | A | B | A |
| | Adhesiveness | A | A | A | A | A | A | A | B | A | A | c |
| | Abrasion resistance | A | A | A | B | A | A | A | A | A | A | C |

As shown in Table 1 and Table 2, it was found that in Examples 1 to 20, the ink composition contains the inorganic pigment, the glass frit, the dispersant, the radically polymerizable monomer, and the radical polymerization initiator, the monofunctional ethylenically unsaturated monomer is 60% by mass or more with respect to the total amount of the radically polymerizable monomer, the ink composition is excellent in the curing properties and can be used to record a clear image, and the cured film is hard to be peeled off from the soft glass base material even though being sintered and excellent in the adhesiveness. In particular, it was found that in Example 1 to Example 11 and Example 13 to Example 19, since the ink composition contains the monofunctional N-vinyl compound, and the content of the monofunctional N-vinyl compound is 20% by mass or more with respect to the total amount of the radically polymerizable monomer, the ink composition is excellent in the curing properties and can be used to record the clearer image. As compared with Example 5, Example 1 is more excellent in the adhesiveness since the content of the monofunctional ethylenically unsaturated monomer is larger than that of Example 5 with respect to the total amount of the radically polymerizable monomer. In addition, as compared with Example 14, Example 1 is excellent in the abrasion resistance since the content of the glass frit with respect to the content of the inorganic pigment is larger than that of Example 14. In addition, as compared with Example 18, Example 1 is excellent in the adhesiveness since the total content of the inorganic pigment and the glass frit is larger than that of Example 18. Furthermore, as compared with Example 19, Example 1 is excellent in the jetting stability since the total content of the inorganic pigment and the glass frit is larger than that of Example 19.

On the other hand, it was found that in Comparative Example 1, although the ink composition contains the inorganic pigment, the glass frit, the dispersant, the radically polymerizable monomer, and the radical polymerization initiator, the content of the monofunctional ethylenically unsaturated monomer is less than 60% by mass with respect to the total amount of the radically polymerizable monomer, so that in the case of being sintered, the cured film is peeled off from the soft glass base material, and the adhesiveness deteriorates.

As described above, since the ink composition of the present disclosure is used to produce the inorganic sintered product and contains the inorganic pigment, the glass frit, the dispersant, the radically polymerizable monomer, and the radical polymerization initiator, and the monofunctional ethylenically unsaturated monomer is 60% by mass or more with respect to the total amount of the radically polymerizable monomer, the ink composition is excellent in the curing properties and can be used to record a clear image, and the cured film is hard to be peeled off from the soft glass base material even though being sintered and excellent in the adhesiveness.

The disclosure of JP2019-126174A filed on July 5, 2019 is incorporated herein by reference in its entirety. In addition, all documents, patent applications, and technical standards described herein are incorporated herein by reference to the same extent as the case where the individual documents, patent applications, and technical standards are specifically and individually stated to be incorporated by reference.

## Claims

1. An active energy ray curable-type ink composition comprising:
an inorganic pigment;
a glass frit;
a dispersant;
a radically polymerizable monomer; and
a radical polymerization initiator,
wherein the radically polymerizable monomer comprises a monofunctional ethylenically unsaturated monomer at 60% by mass or more with respect to a total amount of the radically polymerizable monomer, and the active energy ray curable-type ink composition is used to produce an inorganic sintered product.

2. The active energy ray curable-type ink composition according to claim 1,
wherein the monofunctional ethylenically unsaturated monomer comprises one or more kinds of monomers including a monofunctional N-vinyl compound.

3. The active energy ray curable-type ink composition according to claim 2,
wherein a content of the monofunctional N-vinyl compound is 20% by mass or more with respect to the total amount of the radically polymerizable monomer.

4. The active energy ray curable-type ink composition according to any one of claims 1 to 3,
wherein a ratio of a content of the glass frit to a content of the inorganic pigment is 0.5 or more in terms of mass.

5. The active energy ray curable-type ink composition according to any one of claims 1 to 4,
wherein a total content of the inorganic pigment and the glass frit is 10% by mass to 55% by mass with respect to a total amount of the ink composition.

6. A method of producing an inorganic sintered product comprising:
a step of applying the active energy ray curable-type **ink composition** according to any one of claims 1 to 5 onto a heat-resistant base material;
a step of irradiating the active energy ray curable-type ink composition with active energy rays to form a cured film on the heat-resistant base material; and
a step of sintering the heat-resistant base material on which the cured film is formed to form an inorganic sintered product.
